# EUROPÄISCHE PATENTSCHRIFT

(11) **EP 3 817 511 B1**
(45) Veröffentlichungstag und Bekanntmachung des Hinweises auf die Patenterteilung: **20.03.2024**
(21) Anmeldenummer: 19205906.1
(22) Anmeldetag: 29.10.2019
(51) Int. Cl.: H05B 3/84, B08B 7/02, B60S 1/02

(54) **KRAFTFAHRZEUGKOMPONENTE**
MOTOR VEHICLE COMPONENT
COMPOSANTS DE VÉHICULE AUTOMOBILE

(43) Veröffentlichungstag der Anmeldung: 05.05.2021
(73) Patentinhaber: ZKW Group GmbH, 3250 Wieselburg (AT)
(72) Erfinder: Pitterle, Georg, 3241 Kirnberg an der Mank (AT); Reiter, Thomas, 3325 Ferschitz (AT); Bierwipfl, Christoph, 3376 St. Martin (AT); Artmann, Matthäus, 3370 Ybbs an der Donau (AT); Weißensteiner, Stefan, 3961 Waldenstein (AT)
(74) Vertreter: Patentanwaltskanzlei Matschnig & Forsthuber OG

(56) Entgegenhaltungen:
- EP-A1- 3 375 537
- EP-A2- 3 460 460
- WO-A1-2019/201061
- CN-A- 109 017 230
- KR-A- 20180 045 079
- US-A1- 2008 107 542

## Beschreibung

Die Erfindung betrifft eine Kraftfahrzeugkomponente, umfassend ein zumindest teilweise lichtdurchlässiges Scheibenelement und erste elektronische Anschlussmittel, welche zumindest abschnittsweise in oder an dem Scheibenelement angeordnet sind.

Aus dem Stand der Technik sind Kraftfahrzeugkomponenten mit lichtdurchlässigen Scheibenelementen bekannt. Diese Scheibenelemente können beispielsweise Windschutzscheiben, Heckscheiben, Seitenscheiben, Abdeckscheiben für Scheinwerfer, Rücklichter oder Fahrtrichtungsanzeiger umfassen. Um die Lichtdurchlässigkeit dieser Scheibenelemente zu gewährleisten, werden meist mechanische Reinigungsverfahren angewendet. Die EP 3 460 460 A2 zeigt eine Vorrichtung und eine Methode zur Reinigung von Glasteilen in Kraftfahrzeugen. Aus der US 2008/107542 A1 ist eine Vorrichtung zur Bewegung von Flüssigkeiten auf einer Oberfläche bekannt. Die EP 3 375 537 A1 offenbart eine Reinigungsvorrichtung. Die WO 2019/201061 A1 zeigt eine Vorrichtung zur Entfernung von Beschlag an einer Oberfläche. Aus der KR 2018 0045079 A ist eine Elektro-Wetting Vorrichtung bekannt. Die CN 109 017 230 A zeigt eine Windschutzscheibe mit einer Reinungsvorrichtung.

Die Aufgabe der vorliegenden Erfindung besteht darin, die Reinigung einer Kraftfahrzeugkomponente zu verbessern.

Diese Aufgabe wird durch eine Kraftfahrzeugkomponente mit den Merkmalen von Anspruch 1 gelöst. Bevorzugte Ausführungen sind in den abhängigen Ansprüchen angegeben.

Erfindungsgemäß weist die Kraftfahrzeugkomponente ein mehrschichtiges Folienelement auf, welches zumindest zwei Schichten umfasst, welche sandwichartig übereinander angeordnet sind, wobei das Folienelement folgendes umfasst:
- eine erste Schicht, welche das Scheibenelement, vorzugsweise vollflächig, kontaktiert und ein dielektrisches Material aufweist, wobei die erste Schicht optisch transparente Elektroden aufweist, wobei die Elektroden zweite elektronische Anschlussmittel zur Versorgung der Elektroden mit elektrischer Energie aufweisen, und
- eine zweite Schicht, welche ein hydrophobes Material aufweist, umfasst,
wobei die ersten elektronischen Anschlussmittel mit den zweiten elektronischen Anschlussmitteln verbunden sind, um einen elektrisch leitenden Kontakt zu den Elektroden in der ersten Schicht des Folienelements herzustellen.

Das Folienelement ist beispielsweise an einer Seite bzw. Oberfläche des Scheibenelements angeordnet, wobei das Scheibenelement selbst beispielsweise an einem Kraftfahrzeug befestigt sein kann. Das Scheibenelement ist beispielsweise eine Abdeckscheibe eines Kraftfahrzeugscheinwerfers, eine Windschutzscheibe, eine Seitenscheibe, eine Abdeckscheibe für einen Fahrtsichtungsanzeiger oder eine Heckscheibe. Werden die Elektroden in der ersten Schicht mit Strom versorgt, kann durch die erste und zweite Schicht eine Elektro-Wetting-Vorrichtung realisiert werden, wobei diese das Scheibenelement durch den Elektro-Wetting Vorgang reinigen kann. Damit ergibt sich der Vorteil, dass die Reinigung ohne mechanische Reinigungskomponenten erfolgen kann. Durch die erfindungsgemäße Ausgestaltung, kann das Folienelement an einer Oberfläche des Scheibenelements angeordnet sein, welche der Kraftfahrzeugaußenseite entspricht. Durch die durch das Scheibenelement verlaufenden elektrischen Anschlussmittel kann von einer Fahrzeuginnenseite ein elektrisch leitender Kontakt zu dem an der Fahrzeugaußenseite angebrachten Folienelement hergestellt werden. Die verschiedenen Schichten des Folienelements haben vorzugsweise den gleichen Flächeninhalt und/oder die gleiche geometrische Form. Vorzugsweise sind die Flächenformen der einzelnen Schichten bzw. aller Schichten identisch mit der Flächenform des Scheibenelements.

Das Scheibenelement kann uneben sein. Das Folienelement ist vorzugsweise aus einem Kunststoff hergestellt, wodurch es elastisch verformbar bzw. biegbar ausgestaltet ist. Damit ergibt sich der Vorteil, dass sich das Folienelement vollständig an die Form des Scheibenelements anpassen und dieses vollflächig kontaktieren kann.

Vorzugsweise weist das Scheibenelement eine Öffnung auf, durch welche die ersten oder zweiten elektrischen Anschlussmittel geführt sind. Damit kann insbesondere ein elektrisch leitender Kontakt durch das Scheibenelement hindurch hergestellt werden. Trennt das Scheibenelement beispielsweise einen Innenbereich eines Kraftfahrzeugs von einem Außenbereich, kann vorteilhafterweise das Folienelement beispielsweise an einer der Außenseite zugewandten Oberfläche des Scheibenelements angeordnet sein, wobei die Energieversorgungsvorrichtung der Elektroden des Scheibenelements in einem Innenbereich angeordnet ist. Die Energieversorgung der Elektroden kann dann vom Innenbereich, durch das Scheibenelement hindurch, zum Außenbereich, an welchem sich das Folienelement befindet, erfolgen.

Das Scheibenelement kann ein den Rand des Scheibenelements umschließendes Rahmenelement aufweisen, durch welches die ersten oder zweiten elektrischen Anschlussmittel geführt sind. Das Rahmenelement kann beispielsweise aus einem gummiartigen Material hergestellt sein, wodurch das Rahmenelement gleichzeitig als Dichtungselement ausgebildet sein kann. Vorzugsweise umschließt das Rahmenelement das Scheibenelement vollständig bzw. entlang eines geschlossenen Pfads um das Scheibenelement.

Vorzugsweise ist zwischen dem Scheibenelement und der ersten Schicht des Folienelements eine Substratschicht angeordnet, welche Haftmittel aufweist, die dazu eingerichtet sind, einen haftenden Kontakt zwischen der ersten Schicht des Folienelements und dem Scheibenelement herzustellen. Die Haftmittel sind beispielsweise ein transparenter Klebstoff.

Um einen besonders guten und zuverlässigen Kontakt zwischen den einzelnen Schichten zu gewährleisten, ist der Kontakt zwischen zwei übereinander angeordneten Schichten des Folienelements vorzugsweise vollflächig. Die einzelnen Schichten überlagern sich somit flächendeckend bzw. vollständig. Die Flächenformen aller Schichten sind insbesondere kongruent.

Vorzugsweise sind die Elektroden der ersten Schicht parallel zu einander auf oder innerhalb der ersten Schicht angeordnet. Vorzugsweise sind die Abstände zwischen jeweils zwei benachbarten parallelen Elektroden gleich. Die Anordnung der Elektroden innerhalb der ersten Schicht ist vorzugsweise kammförmig und/oder mäanderförmig. Damit ergibt sich der Vorteil, dass die Elektroden über die gesamte Fläche des Scheibenelements im Wesentlichen gleichmäßig angeordnet sind.

Um eine unerwünschte Reflexion von Licht an dem Folienelement zu verhindern, kann das Folienelement eine weitere Schicht umfassen, welche eine Antireflexbeschichtung aufweist.

Um die Schichten des Folienelements und/oder das Scheibenelement von mechanischen Beschädigungen zu schützen, kann das Folienelement eine weitere Schicht umfassen, welche hartbeschichtet ist. Die hartbeschichtete Schicht ist vorzugsweise eine Harteloxalschicht oder eine hartanodische Schicht und kann beispielsweise eine Schicht aus transparentem Aluminium umfassen.

Gemäss der Erfindung umfasst die erste Schicht ein Heizelement, welches dritte elektronische Anschlussmittel aufweist, welche mit den ersten und/oder zweiten elektronischen Anschlussmittel verbindbar sind. Als Heizelement kann zumindest ein, vorzugsweise transparenter, Heizdraht vorgesehen sein. Das Heizelement kann auch in einer weiteren Schicht angeordnet sein. Es können auch mehrere Heizdrähte, welche über gemeinsame elektrische Anschlussmittel verfügen, vorgesehen sein.

Vorzugsweise sind alle Schichten des Folienelements transparent ausgebildet. Erfindungsgemäß ist ein System vorgesehen, welches eine Kraftfahrzeugkomponente und eine Beleuchtungsvorrichtung zur Erzeugung und Abstrahlung von Licht umfasst, wobei die Beleuchtungsvorrichtung und die Kraftfahrzeugkomponente dergestalt zueinander angeordnet sind, dass das Licht der Beleuchtungsvorrichtung durch das Scheibenelement und das Folienelement der Kraftfahrzeugkomponente hindurch gestrahlt wird. Vorzugsweise ist die Beleuchtungsvorrichtung an einer dem Folienelement abgewandten Seite des Scheibenelements angeordnet. Die Beleuchtungsvorrichtung ist beispielsweise innerhalb eines Kraftfahrzeugscheinwerfers angeordnet, wobei das Scheibenelement vorzugsweise als Abdeckscheibe des Kraftfahrzeugscheinwerfers ausgebildet ist und das Folienelement an der Kraftfahrzeugaußenseite der Abdeckscheibe angeordnet sein kann. Das System kann elektronische Steuermittel umfassen, welche mit den ersten elektronischen Anschlussmittel verbunden und dazu eingerichtet sind, die Elektroden des Folienelements mit einem Wechselspannungssignal und das Heizelement des Folienelements mit einem Gleichspannungssignal anzusteuern. Durch die Ansteuerung ist das Folienelement insbesondere als Elektro-Wetting-Folie und das Heizelement als Heizfolie ausgestaltet. Dadurch kann vorteilhafterweise das Scheibenelement gleichzeitig gereinigt und geheizt werden.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 einen schematischen Aufbau einer erfindungsgemäßen Kraftfahrzeugkomponente; und
Fig. 2 einen Verlauf von Elektroden und Heizelementen in einer Schicht eines Folienelements der Kraftfahrzeugkomponente.

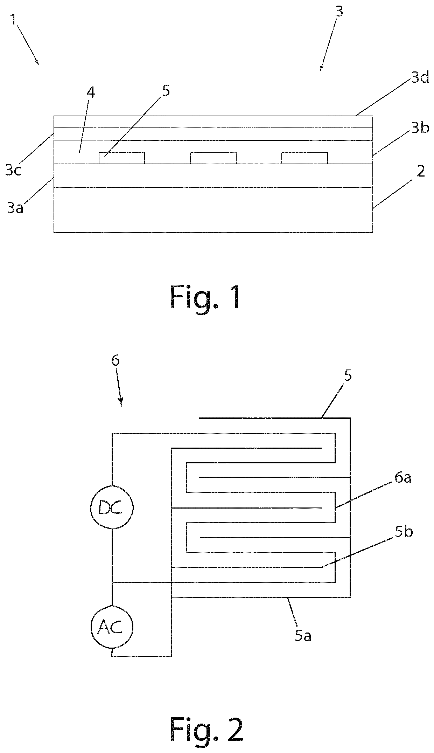

Fig. 1 zeigt einen Schichtaufbau einer erfindungsgemäßen Kraftfahrzeugkomponente 1. Die Kraftfahrzeugkomponente 1 umfasst ein zumindest teilweise lichtdurchlässiges Scheibenelement 2 mit ersten elektronischen Anschlussmittel (nicht gezeigt), welche zumindest abschnittsweise in oder an dem Scheibenelement 2 angeordnet sind. Das Scheibenelement 2 kann eben oder uneben ausgestaltet sein. An dem Scheibenelement 2 ist ein mehrschichtiges Folienelement 3 angeordnet, welches zumindest zwei Schichten umfasst. In dem gezeigten Ausführungsbeispiel weist das Folienelement 3 vier Schichten 3a, 3b, 3c, 3d auf, wobei die Schichten 3a und 3d optional sind. Die Schichten sind sandwichartig übereinander angeordnet, wobei der Kontakt zwischen zwei übereinander angeordneten Schichten des Folienelements 3 vollflächig ist. Die erste Schicht 3b des Folienelements 3 kann das Scheibenelement 2, vorzugsweise vollflächig, kontaktieren. In dem gezeigten Ausführungsbeispiel ist zwischen dem Scheibenelement 2 und der ersten Schicht 3b des Folienelements 3 eine optionale Substratschicht 3a angeordnet. Die Substratschicht 3a weist Haftmittel auf, die dazu eingerichtet sind, einen haftenden Kontakt zwischen dem Folienelement 3 und dem Scheibenelement 2 herzustellen. Alternativ zu der Substratschicht 3a kann die erste Schicht 3b selbsthaftend bzw. selbstklebend ausgebildet sein und das Scheibenelement 2 direkt kontaktieren. Die Haftmittel können auch an dem Scheibenelement 2 aufgebracht sind. Die erste Schicht 3b weist ein dielektrisches Material 4 auf, wobei die erste Schicht 3b optisch transparente Elektroden 5 aufweist, wobei die Elektroden 5 zweite elektronische Anschlussmittel (nicht gezeigt) zur Versorgung der Elektroden 5 mit elektrischer Energie aufweisen. Die Elektroden 5 der ersten Schicht sind vorzugsweise parallel zu einander auf oder in der ersten Schicht 3b angeordnet. Die Elektroden 5 sind innerhalb des dielektrischen Materials 4 aufgenommen. Das dielektrische Material 4 umschließt bzw. umhüllt die Elektroden 5 im Wesentlichen vollständig. Eine zweite Schicht 3c weist ein hydrophobes Material auf. Um die Elektroden 5 mit Energie zu versorgen bzw. um einen elektrisch leitenden Kontakt zu den Elektroden 5 herzustellen, sind die ersten elektronischen Anschlussmittel mit den zweiten elektronischen Anschlussmitteln verbunden.

Um den Kontakt zwischen den ersten und zweiten elektronischen Anschlussmitteln zu gewährleisten, weist das Scheibenelement 2 eine Öffnung auf (nicht gezeigt), durch welche die ersten oder zweiten elektrischen Anschlussmittel geführt sind. Das Scheibenelement 2 kann ein den Rand des Scheibenelements 2 umschließendes Rahmenelement (nicht gezeigt) aufweisen. Alternativ oder zusätzlich zu der Öffnung in dem Scheibenelement 2 können die ersten oder zweiten elektrischen Anschlussmittel durch das Rahmenelement geführt sein. Das Folienelement 3 umfasst in dem gezeigten Ausführungsbeispiel eine weitere Schicht 3c, welche ein hydrophobes Material aufweist. Ferner umfasst das Folienelement 3 eine weitere, optionale, Schicht 3d, welche eine Antireflexbeschichtung umfasst oder hartbeschichtet ist. Die Antireflexbeschichtung und die hartbeschichtete Schicht können auch als zwei getrennte Schichten 3d, 3e ausgebildet sein. Alle Schichten des Folienelements sind vorzugsweise transparent ausgebildet.

Wie in Fig. 2 ersichtlich umfasst die erste Schicht 3b zusätzlich ein Heizelement 6. Das Heizelement 6 weist dritte elektronische Anschlussmittel auf (nicht gezeigt), welche mit den ersten und/oder zweiten elektronischen Anschlussmittel verbindbar sind. In Fig. 2 ist eine mögliche Anordnung der Elektroden 5 und der Heizdrähte 6a des Heizelements 6 gezeigt. Die Heizdrähte 6a können optisch transparent ausgebildet sein. Die Elektroden 5 sind in Form von zwei ineinander greifenden Kämme 5a, 5b, ausgebildet. Zwischen den Kämmen 5a, 5b ist der Heizdraht 6a des Heizelements 6 mäanderförmig angeordnet. Damit sind in einer Richtung quer zu den Kammarmen abwechselnd Elektroden 5 und Heizdrähte 6a angeordnet. Werden die Elektroden 5 mit einem Wechselspannungssignal und das Heizelement 6 mit einem Gleichspannungssignal angesteuert, kann das Scheibenelement 2 mittels Elektro-Wetting gereinigt und gleichzeitig mittels dem Heizelement 6 beheizt werden.

Das Reinigen bei gleichzeitiger Beheizung ist insbesondere vorteilhaft bei einem System mit einer Kraftfahrzeugkomponente 1 und einer Beleuchtungsvorrichtung, welche zur Erzeugung und Abstrahlung von Licht eingerichtet ist. Das System ist beispielsweise ein Kraftfahrzeugscheinwerfer, wobei das Scheibenelement 2 die Abdeckscheibe des Kraftfahrzeugscheinwerfers bildet. Im Falle eines Kraftfahrzeugscheinwerfers sind die Beleuchtungsvorrichtung und die Kraftfahrzeugkomponente 1 dergestalt zueinander angeordnet, dass das Licht der Beleuchtungsvorrichtung durch das Scheibenelement 2 und das Folienelement 3 der Kraftfahrzeugkomponente 1 hindurch gestrahlt wird. Bevorzugt wird zur Energieversorgung der Elektroden 5 sowie des Heizelements 6 die gleiche Energiequelle wie für die Beleuchtungsvorrichtung verwendet. Dazu kann beispielsweise einen leitender Kontakt von der Beleuchtungsvorrichtung zu den ersten Anschlussmittel vorgesehen sein.

## Patentansprüche

1. Kraftfahrzeugkomponente (1), umfassend:
- ein zumindest teilweise lichtdurchlässiges Scheibenelement (2),
- erste elektronische Anschlussmittel, welche zumindest abschnittsweise in oder an dem Scheibenelement (2) angeordnet sind,
- ein mehrschichtiges Folienelement (3), welches zumindest zwei Schichten (3b, 3c) umfasst, welche sandwichartig übereinander angeordnet sind, wobei das Folienelement (3) folgendes umfasst:
- eine erste Schicht (3b), welche das Scheibenelement (2), vorzugsweise vollflächig, kontaktiert und ein dielektrisches Material (4) aufweist, wobei die erste Schicht (3b) optisch transparente Elektroden (5) aufweist, wobei die Elektroden (5) zweite elektronische Anschlussmittel zur Versorgung der Elektroden (5) mit elektrischer Energie aufweisen, und
- eine zweite Schicht (3c), welche ein hydrophobes Material aufweist, umfasst,
wobei die ersten elektronischen Anschlussmittel mit den zweiten elektronischen Anschlussmitteln verbunden sind, um einen elektrisch leitenden Kontakt zu den Elektroden (5) in der ersten Schicht (3b) des Folienelements (3) herzustellen,
**dadurch gekennzeichnet, dass**
die erste Schicht (3b) zusätzlich ein Heizelement (6) umfasst, welches dritte elektronische Anschlussmittel aufweist, welche mit den ersten und/oder zweiten elektronischen Anschlussmittel verbindbar sind.

2. Kraftfahrzeugkomponente (1) nach Anspruch 1, wobei das Scheibenelement (2) uneben ist.

3. Kraftfahrzeugkomponente (1) nach einem der Ansprüche 1 oder 2, wobei das Scheibenelement (3) eine Öffnung aufweist, durch welche die ersten oder zweiten elektrischen Anschlussmittel geführt sind.

4. Kraftfahrzeugkomponente (1) nach einem der Ansprüche 1 oder 2, wobei das Scheibenelement (2) ein den Rand des Scheibenelements (2) umschließendes Rahmenelement aufweist, durch welches die ersten oder zweiten elektrischen Anschlussmittel geführt sind.

5. Kraftfahrzeugkomponente (1) nach einem der vorhergehenden Ansprüche, wobei zwischen dem Scheibenelement (2) und der ersten Schicht (3b) des Folienelements (3) eine Substratschicht (3a) angeordnet ist, welche Haftmittel aufweist, die dazu eingerichtet sind, einen haftenden Kontakt zwischen dem Folienelement (3) und dem Scheibenelement (2) herzustellen.

6. Kraftfahrzeugkomponente (1) nach einem der vorhergehenden Ansprüche, wobei der Kontakt zwischen zwei übereinander angeordneten Schichten des Folienelements (3) vollflächig ist.

7. Kraftfahrzeugkomponente (1) nach einem der vorhergehenden Ansprüche, wobei die Elektroden (5) der ersten Schicht (3b) parallel zu einander auf oder innerhalb der ersten Schicht (3b) angeordnet sind.

8. Kraftfahrzeugkomponente (1) nach einem der vorhergehenden Ansprüche, wobei das Folienelement (3) eine weitere Schicht (3d) umfasst, welche eine Antireflexbeschichtung aufweist.

9. Kraftfahrzeugkomponente (1) nach einem der vorhergehenden Ansprüche, wobei das Folienelement eine weitere Schicht (3e) umfasst, welche hartbeschichtet ist.

10. Kraftfahrzeugkomponente (1) nach einem der vorhergehenden Ansprüche, wobei alle Schichten des Folienelements (3) transparent ausgebildet sind.

11. System, umfassend eine Kraftfahrzeugkomponente (1) nach einem der Ansprüche 1 bis 10 und eine Beleuchtungsvorrichtung zur Erzeugung und Abstrahlung von Licht, wobei die Beleuchtungsvorrichtung und die Kraftfahrzeugkomponente dergestalt zueinander angeordnet sind, dass das Licht der Beleuchtungsvorrichtung durch das Scheibenelement (2) und das Folienelement (3) der Kraftfahrzeugkomponente (1) hindurch gestrahlt wird.

12. System nach Anspruch 11, wobei die Beleuchtungsvorrichtung an einer dem Folienelement (3) abgewandten Seite des Scheibenelements (2) angeordnet ist.

13. System nach Anspruch 11 oder 12, umfassend elektronische Steuermittel, welche mit den ersten elektronischen Anschlussmittel verbunden und dazu eingerichtet sind, die Elektroden (5) des Folienelements (3) mit einem Wechselspannungssignal und das Heizelement (6) des Folienelements (3) mit einem Gleichspannungssignal anzusteuern.

14. Kraftfahrzeugscheinwerfer, umfassend ein System nach einem der Ansprüche 11 bis 13.

## Claims

1. Motor vehicle component (1), comprising
- an at least partially translucent windshield element (2),
- first electronic connection means, which are arranged at least in sections in or on the window element (2),
- a multilayer film element (3) which comprises at least two layers (3b, 3c) which are arranged one above the other in a sandwich-like manner, the film element (3) comprising
- a first layer (3b) which contacts the disk element (2), preferably over the entire surface, and has a dielectric material (4), the first layer (3b) having optically transparent electrodes (5), the electrodes (5) having second electronic connection means for supplying the electrodes (5) with electrical energy, and
- a second layer (3c) comprising a hydrophobic material,
the first electronic connection means being connected to the second electronic connection means in order to establish an electrically conductive contact with the electrodes (5) in the first layer (3b) of the foil element (3),
**characterized in that**
the first layer (3b) additionally comprises a heating element (6) which has third electronic connection means which can be connected to the first and/or second electronic connection means.

2. Motor vehicle component (1) according to claim 1, wherein the disk element (2) is uneven.

3. Motor vehicle component (1) according to one of claims 1 or 2, wherein the windshield element (3) has an opening through which the first or second electrical connection means are guided.

4. Motor vehicle component (1) according to one of claims 1 or 2, wherein the windshield element (2) has a frame element enclosing the edge of the windshield element (2), through which frame element the first or second electrical connection means are guided.

5. Motor vehicle component (1) according to one of the preceding claims, wherein a substrate layer (3a) is arranged between the windshield element (2) and the first layer (3b) of the foil element (3), which substrate layer (3a) has adhesive means which are set up to establish an adhesive contact between the foil element (3) and the windshield element (2).

6. Motor vehicle component (1) according to one of the preceding claims, wherein the contact between two superimposed layers of the film element (3) is full-surface.

7. Motor vehicle component (1) according to one of the preceding claims, wherein the electrodes (5) of the first layer (3b) are arranged parallel to each other on or within the first layer (3b).

8. Motor vehicle component (1) according to one of the preceding claims, wherein the foil element (3) comprises a further layer (3d) which has an anti-reflective coating.

9. Motor vehicle component (1) according to one of the preceding claims, wherein the foil element comprises a further layer (3e) which is hard-coated.

10. Motor vehicle component (1) according to one of the preceding claims, wherein all layers of the foil element (3) are transparent.

11. System, comprising a motor vehicle component (1) according to one of claims 1 to 10 and an illumination device for generating and emitting light, wherein the illumination device and the motor vehicle component are arranged relative to each other in such a way that the light of the illumination device is radiated through the window element (2) and the foil element (3) of the motor vehicle component (1).

12. System according to claim 11, wherein the lighting device is arranged on a side of the windshield element (2) facing away from the foil element (3).

13. System according to claim 11 or 12, comprising electronic control means which are connected to the first electronic connection means and are set up to control the electrodes (5) of the foil element (3) with an AC voltage signal and the heating element (6) of the foil element (3) with a DC voltage signal.

14. Motor vehicle headlamp, comprising a system according to any one of claims 11 to 13.

## Revendications

1. Composant de véhicule automobile (1), comprenant :
- un élément de vitre (2) au moins partiellement translucide,
- des premiers moyens de connexion électroniques, qui sont disposés au moins par sections dans ou sur l'élément de vitre (2),
- un élément de film multicouche (3), qui comprend au moins deux couches (3b, 3c), qui sont disposées en sandwich l'une sur l'autre, l'élément de film (3) comprenant ce qui suit :
- une première couche (3b) qui est en contact avec l'élément en forme de disque (2), de préférence sur toute sa surface, et qui présente un matériau diélectrique (4), la première couche (3b) présentant des électrodes (5) optiquement transparentes, les électrodes (5) présentant des deuxièmes moyens de connexion électroniques pour alimenter les électrodes (5) en énergie électrique, et
- une deuxième couche (3c) comprenant un matériau hydrophobe,
les premiers moyens de connexion électroniques étant connectés aux seconds moyens de connexion électroniques pour établir un contact électriquement conducteur avec les électrodes (5) dans la première couche (3b) de l'élément en feuille (3),
**caractérisé en ce que**
la première couche (3b) comprend en outre un élément chauffant (6) qui présente des troisièmes moyens de connexion électroniques qui peuvent être reliés aux premiers et/ou deuxièmes moyens de connexion électroniques.

2. Composant de véhicule automobile (1) selon la revendication 1, dans lequel l'élément de vitre (2) est inégal.

3. Composant de véhicule automobile (1) selon l'une des revendications 1 ou 2, dans lequel l'élément de vitre (3) présente une ouverture à travers laquelle sont guidés les premiers ou deuxièmes moyens de connexion électrique.

4. Composant de véhicule automobile (1) selon l'une des revendications 1 ou 2, dans lequel l'élément de vitre (2) présente un élément de cadre entourant le bord de l'élément de vitre (2), à travers lequel sont guidés les premiers ou deuxièmes moyens de connexion électrique.

5. Composant de véhicule automobile (1) selon l'une quelconque des revendications précédentes, dans lequel entre l'élément de vitre (2) et la première couche (3b) de l'élément de film (3) est disposée une couche de substrat (3a) comportant des moyens d'adhésion agencés pour établir un contact adhérent entre l'élément de film (3) et l'élément de vitre (2).

6. Composant de véhicule automobile (1) selon l'une quelconque des revendications précédentes, dans lequel le contact entre deux couches superposées de l'élément de film (3) est total.

7. Composant de véhicule automobile (1) selon l'une des revendications précédentes, dans lequel les électrodes (5) de la première couche (3b) sont disposées parallèlement les unes aux autres sur ou à l'intérieur de la première couche (3b).

8. Composant de véhicule automobile (1) selon l'une des revendications précédentes, dans lequel l'élément de film (3) comprend une autre couche (3d) qui présente un revêtement antireflet.

9. Composant de véhicule automobile (1) selon l'une des revendications précédentes, dans lequel l'élément de film comprend une autre couche (3e) qui est revêtue d'une couche dure.

10. Composant de véhicule automobile (1) selon l'une des revendications précédentes, dans lequel toutes les couches de l'élément de film (3) sont transparentes.

11. Système comprenant un composant de véhicule automobile (1) selon l'une quelconque des revendications 1 à 10 et un dispositif d'éclairage pour générer et émettre de la lumière, le dispositif d'éclairage et le composant de véhicule automobile étant agencés l'un par rapport à l'autre de telle sorte que la lumière du dispositif d'éclairage est émise à travers l'élément de vitre (2) et l'élément de film (3) du composant de véhicule automobile (1).

12. Système selon la revendication 11, dans lequel le dispositif d'éclairage est disposé sur une face de l'élément de vitre (2) opposée à l'élément de film (3).

13. Système selon la revendication 11 ou 12, comprenant des moyens électroniques de commande reliés aux premiers moyens électroniques de connexion et agencés pour commander les électrodes (5) de l'élément de feuille (3) par un signal de tension alternative et l'élément chauffant (6) de l'élément de feuille (3) par un signal de tension continue.

14. Projecteur de véhicule automobile comprenant un système selon l'une quelconque des revendications 11 à 13.
